# EUROPÄISCHE PATENTSCHRIFT

(11) **EP 3 208 152 B1**
(45) Veröffentlichungstag und Bekanntmachung des Hinweises auf die Patenterteilung: **10.04.2019**
(21) Anmeldenummer: 16155866.3
(22) Anmeldetag: 16.02.2016
(51) Int. Cl.: B60R 1/074, B60R 1/076

(54) **ABKLAPPVORRICHTUNG FÜR EINEN AUSSENSPIEGEL**
FOLDING DEVICE FOR AN EXTERNAL MIRROR
DISPOSITIF RABATTABLE POUR UN RETROVISEUR EXTERIEUR

(43) Veröffentlichungstag der Anmeldung: 23.08.2017
(73) Patentinhaber: Magna Auteca GmbH, 8160 Krottendorf bei Weiz (AT)
(72) Erfinder: SCHADLER, Bernhard, 8211 Oberrettenbach (AT)
(74) Vertreter: Zangger, Bernd

(56) Entgegenhaltungen:
- WO-A1-2015/008235
- WO-A1-2015/173090
- DE-A1- 10 042 678
- DE-B3-102006 021 249

## Beschreibung

### Gebiet der Erfindung

Die vorliegende Erfindung betrifft eine Abklappvorrichtung für einen Außenspiegel eines Kraftfahrzeuges und einen Außenspiegel eines Kraftfahrzeuges umfassend eine solche Abklappvorrichtung.

### Stand der Technik

Derartige Abklappvorrichtungen werden in Außenspiegeln von Kraftfahrzeugen verwendet, wobei der Außenspiegel mittels der Abklappvorrichtung insbesondere durch einen elektrischen Antrieb der Abklappvorrichtung zwischen einer Fahrstellung (ausgeklappt) und einer Parkstellung (eingeklappt) verstellbar ist.

Der Antrieb einer solchen Abklappvorrichtung umfasst üblicherweise einen elektrischen Motor mit einer Motorwelle, die beispielsweise über ein Schneckengetriebe eine Klappbewegung zwischen dem Antrieb und einem Abtrieb des Schneckengetriebes auslösen kann. Dabei kann eine Schnecke auf die Motorwelle fest aufgepresst sein (Motorschnecke). Die Rotation der Motorwelle kann über eine Zwischenwelle auf ein Abtriebszahnrad übertragen werden, das im Normalbetrieb jedoch drehfest mit einem Spiegelfuß verbunden ist, so dass es zu einer Klappbewegung kommen kann, bei der sich der Motor oder die Zwischenwelle samt dem Motor um den stehenden Abtrieb schrauben.

Bei Abklappvorrichtungen dieser Art ist es üblich, dass der Motor samt Motorwelle zwischen einem erstem Gehäuseteil und einem zweiten Gehäuseteil, insbesondere zwischen einem Träger und einem Deckel, gehalten und positioniert ist. Auch ist es üblich dass die Zwischenwelle über ein weiteres Gehäusebauteil und/oder dass das Abtriebszahnrad am Spiegelfuß gelagert und positioniert sind.

Beispielsweise offenbart die JP 2004 082953 A eine Abklappvorrichtung bei welcher Motor und Zwischenwelle über ein Zwischengehäuse positioniert sind, ein Abtriebszahnrad jedoch über eine am Spiegelfuß montierte Drehachse.

Die DE 100 42 678 A1 offenbart eine Abklappvorrichtung wobei ein Motor in einem Gehäuseteil, das Abtriebszahnrad jedoch in einem separaten Gehäuseverschlussteil gelagert und positioniert ist.

In der Lösung der WO 2015 173 090 A1 ist der Motor sowohl von einem Trägergehäuse als auch von einem Deckel positioniert und das Abtriebszahnrad indirekt über eine Rastscheibe positioniert.

Die DE 10 2006 021249 B3 offenbart eine Abklappvorrichtung nach dem Oberbegriff von Anspruch 1.

In den bekannten Lösungen sind die Achsabstände jeweils durch mehrere separate Bauteile bestimmt. Wenn es bei der Montage zu einem Versatz dieser Bauteile kommt, schlägt sich dies in Abweichungen der Achsabstände nieder, was wiederum zu erhöhter Geräuschentwicklung und Verschleiß führt.

### Zusammenfassung der Erfindung

Es ist eine Aufgabe der Erfindung, eine Abklappvorrichtung für einen Außenspiegel und einen Außenspiegel umfassend eine solche Abklappvorrichtung anzugeben, wobei die Abklappvorrichtung einen geringen Bauraum einnimmt und dabei wenig Geräusche verursacht und geringen Verschleiß aufweist.

Die Lösung der Aufgabe erfolgt durch eine Abklappvorrichtung für einen Außenspiegel eines Kraftfahrzeuges der einen Spiegelfuß und einen Spiegelkopf umfasst, wobei mittels der Abklappvorrichtung der Spiegelkopf relativ zum Spiegelfuß ein- und/oder ausklappbar ist, wobei die Abklappvorrichtung einen mit einem der Elemente Spiegelkopf oder Spiegelfuß verbindbaren Träger umfasst und einen am Träger befestigten Motor mit einer Motorwelle umfasst, wobei die Abklappvorrichtung einen mit dem anderen der Elemente Spiegelfuß oder Spiegelkopf verbindbaren Abtrieb umfasst, wobei der Abtrieb über ein Getriebe mit der Motorwelle verbunden ist, wobei die Motorwelle und die Achse des Abtriebs zueinander parallel stehen und wobei Motor, Abtrieb und Getriebe durch ein einziges Bauteil, nämlich den Träger, zueinander positioniert werden, so dass die Achsabstände von Motorwelle, Achse des Abtriebs und den Achsen der dazwischen liegenden Getriebeelemente durch das einzige Bauteil, nämlich den Träger, festgelegt werden.

Erfindungsgemäß wird eine Abklappvorrichtung angegeben, wobei die Motorwelle und die Achse des Abtriebs zueinander parallel stehen um eine kleine Bauweise zu ermöglichen. Der Motor kann dabei bevorzugt stehend verbaut werden. Alle für den Betrieb der Abklappvorrichtung erforderlichen Achsen sind durch ein gemeinsames Bauteil positioniert und insbesondere direkt in oder an diesem Bauteil, nämlich einem Träger, gelagert, so dass die Achsabstände durch das einzige Bauteil festgelegt sind. Der Träger ist bevorzugt ein Gehäuseteil der Abklappvorrichtung. Durch die gemeinsame Lagerung werden Versetze zwischen Achspositionen bestimmenden Bauteilen vermieden und somit auch die dadurch verursachten Geräusche und Verschleiß vermieden.

Das Getriebe umfasst bevorzugt zumindest eine Zwischenwelle. Die Position der Zwischenwelle ist dann über den Träger bestimmt.

Vorzugsweise umfasst das Getriebe der Abklappvorrichtung zumindest eine erste Schnecke, bevorzugt zusätzlich eine zweite Schnecke, wobei die erste Schnecke an der Motorwelle angebracht ist und die bevorzugte zweite Schnecke an der Zwischenwelle angebracht ist. Die erste Schnecke kann ein Schneckenrad der Zwischenwelle antreiben. Die zweite Schnecke, auf der Zwischenwelle, kann mit einem feststehenden als Abtriebszahnrad dienenden weiteren Schneckenrad kämmen. Bei einer Klappbewegung kann sich der Motor oder bevorzugt die Zwischenwelle samt dem Motor um den stehenden Abtrieb schrauben.

Die Schnecken können beispielsweise als ZI-Schnecken ausgebildet sein. Die Schneckenräder können als Stirnräder, insbesondere schrägverzahnte Stirnräder, ausgebildet sein. ZI-Schnecken haben den Vorteil, dass sich die Verzahnung gegenüber axialen Verschiebungen indifferent verhält, so dass allein der direkte Achsabstand entscheidend für das Eingreifen ist.

Die Motorwelle kann axial in Richtung zum Motor hin direkt am Träger abgestützt sein.

Gemäß einer Ausführungsform ist ein Druckstück derart am Träger fixiert, dass das Druckstück die Motorwelle gegen den Motor drückt. Erfindungsgemäß wird ein Druckstück verwendet, das einen optimierten Druck auf die Motorwelle ausüben kann um ein optimiertes axiales Spiel der Motorwelle zu erreichen und hierdurch Geräuschentwicklungen beim Lastwechsel zu verringern.

Vorzugsweise ist das Druckstück zwischen der Motorwelle und einem Gehäuseteil, insbesondere dem Träger oder einem Deckel, angeordnet, insbesondere eingespannt.

Bevorzugt ist das Druckstück über eine Einstellschraube im Wesentlichen axial gegen die Motorwelle verstellbar, wobei die Einstellschraube besonders bevorzugt mit einem Gewinde im Träger in Eingriff ist. Die im Wesentlichen axiale Verstellung des Druckstückes in Bezug auf die Motorwelle kann auch erreicht werden, wenn das Druckstück zusätzlich zu einer axialen Komponente der Bewegung auch eine Komponente in einer nicht axialen Richtung aufweist, beispielsweise bei einer Schwenkbewegung bzw. Kippbewegung des Druckstückes über eine von der Motorwellenachse beabstandete Schwenkachse. Über eine Gewindeselbsthemmung der Einstellschraube am Träger kann das Druckstück nach Einstellung des gewünschten axialen Spiels in Position gehalten werden.

Vorzugsweise ist das Druckstück zumindest an einem Befestigungspunkt, bevorzugt an einer Befestigungsachse, kippbar im Träger eingehängt, wobei der Befestigungspunkt bzw. die Befestigungsachse auf einer der Einstellschraube gegenüberliegenden Seite der Motorwelle bzw. der Motorwellenachse liegt. Durch die Gewindeselbsthemmung der Einstellschraube wird ein ungewolltes Kippen bzw. Verschwenken des Druckstücks verhindert.

Das Druckstück kann auch zum Halten eines bestimmten axialen Spiels am Träger verschweißt sein, insbesondere wenn keine an der Abklappvorrichtung dauerhaft verbleibende Einstellschraube verwendet wird.

Erfindungsgemäß kann ein Außenspiegel eines Kraftfahrzeuges einen Spiegelfuß, einen Spiegelkopf und eine erfindungsgemäße Abklappvorrichtung umfassen, wobei der Träger der Abklappvorrichtung mit dem Spiegelkopf oder dem Spiegelfuß verbunden ist, wobei der Abtrieb der Abklappvorrichtung mit dem anderen der genannten Elemente, nämlich dem Spiegelfuß oder dem Spiegelkopf, verbunden ist, so dass mittels der Abklappvorrichtung der Spiegelkopf relativ zum Spiegelfuß ein- und/oder ausklappbar ist.

Bei Verwendung einer an der Abklappvorrichtung dauerhaft verbleibenden Einstellschraube sind keine weiteren Befestigungsmaßnahmen nötig und das Druckstück wird über die Gewindeselbsthemmung der Einstellschraube in Position gehalten, andernfalls kann das Druckstück auch an den Träger geschweißt sein.

Der Träger ist bevorzugt mittels einer Spiegelkopf-Druckfeder gegen das mit dem Abtrieb verbindbare Element Spiegelfuß oder Spiegelkopf oder eine damit drehfeste Rastscheibe vorgespannt. Die Spiegelkopf-Druckfeder kann Teil einer Sicherheitsvorrichtung sein, die eine Verdrehung zwischen Spiegelkopf und Spiegelfuß bei großer äußerer Krafteinwirkung zulässt. Die Spiegelkopf-Druckfeder kann außerhalb des Abklappantriebs angeordnet sein oder auch im Abklappantrieb integriert sein.

### Kurzbeschreibung der Zeichnungen

Die Erfindung wird im Folgenden beispielhaft unter Bezugnahme auf die Zeichnungen beschrieben.
- Fig. 1: ist eine dreidimensionale Explosionsdarstellung einer Abklappvorrichtung mit Spiegelfuß und tragendendem Teil eines Spiegelkopfes.
- Fig. 2: ist eine dreidimensionale Darstellung von im Träger einer erfindungsgemäßen Abklappvorrichtung gelagerten Komponenten.
- Fig. 3: ist eine Schnittansicht einer Abklappvorrichtung gemäß Schnitt A-A der Fig. 4.
- Fig. 4: zeigt eine erfindungsgemäße Abklappvorrichtung von unten mit dem Verlauf des Schnittes A-A.
- Fig. 5: ist eine teilweise Schnittansicht einer alternativen Ausführungsform einer erfindungsgemäßen Abklappvorrichtung.

### Detaillierte Beschreibung der Erfindung

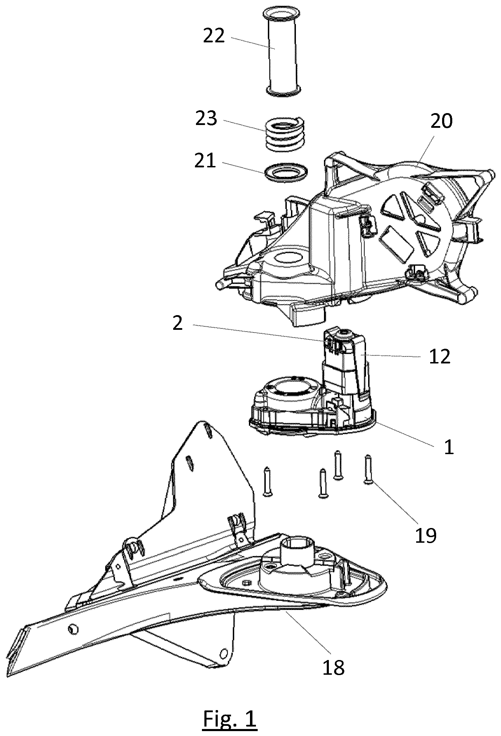

In den Fig. 1 ist eine erfindungsgemäße Abklappvorrichtung mit den umgebenden Bauteilen in einem erfindungsgemäßen Außenspiegel in einer Explosionsansicht dargestellt. Von einem Spiegelkopf des Außenspiegels ist lediglich der tragende Teil des Spiegelkopfes 20 dargestellt. Zwischen diesem tragenden Teil des Spiegelkopfes 20 und dem Spiegelfuß 18 ist die Abklappvorrichtung angeordnet, von welcher in Fig. 1 der Träger 1 und der im Träger 1 mit Hilfe einer Motorspannklammer 12 gelagerte Motor 2 ersichtlich. Die Abklappvorrichtung wird mit Hilfe von Schrauben 19 in den Spiegelkopf eingeschraubt. Zusätzlich wird der tragende Teil des Spiegelkopfes 20 mit Hilfe eines Rohrniets 22 und einer starken Spiegelkopf-Druckfeder 23, die auf eine Gleitscheibe 21 wirkt, gegen den Spiegelfuß 18 gedrückt. Die Spiegelkopf-Druckfeder 23 kann beispielsweise eine Kraft von ca. 650 N ausüben. Die Spiegelkopf-Druckfeder 23 ist Teil einer Sicherheitskupplung welche eine Verdrehung zwischen Spiegelkopf 20 und Spiegelfuß 18 bei übermäßiger äußerer Krafteinwirkung auf den Spiegelkopf zulässt. Die Spiegelkopf-Druckfeder 23 kann auch im Abklappantrieb selbst, insbesondere innerhalb des Trägers 1, integriert sein (nicht dargestellt). Die externe Ausbildung der Spiegelkopf-Druckfeder 23 gemäß Fig. 1 hat den Vorteil, dass falls die Befestigungsschrauben 19 der Abklappvorrichtung locker werden, die Spiegelkopf-Druckfeder 23 weiterhin den Spiegelkopf gegen die Abklappvorrichtung und den Spiegelfuß 18 drückt.

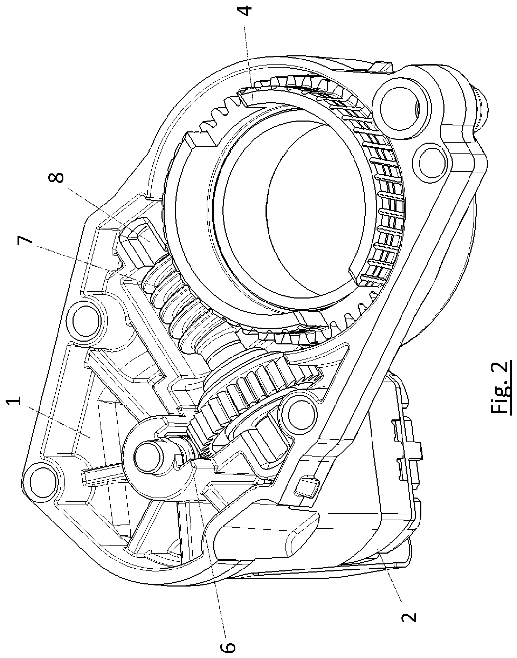

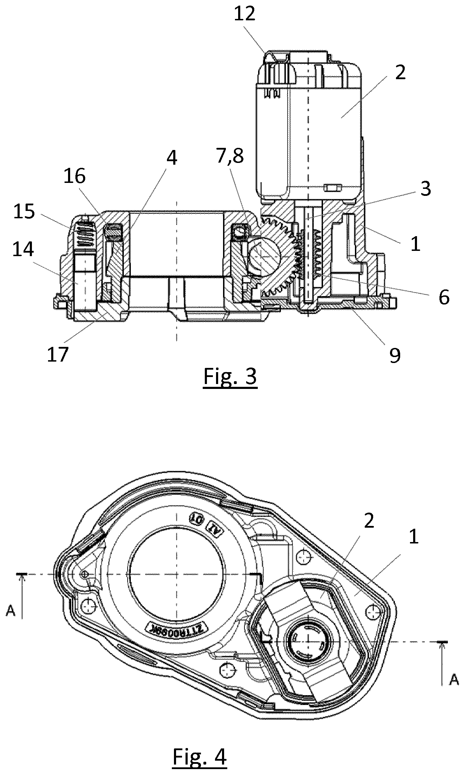

Eine erfindungsgemäße Abklappvorrichtung ist genauer in den Fig. 2 bis 4 dargestellt, wobei Fig. 2 eine dreidimensionale Darstellung von im Träger 1 der Abklappvorrichtung gelagerten Komponenten zeigt und Fig. 3 eine Schnittansicht einer Abklappvorrichtung gemäß dem in Fig. 4 dargestellten Schnitt A-A, der sowohl durch die Achse der Motorwelle 3 als auch die Achse des Abtriebs 4 verläuft.

Die Abklappvorrichtung umfasst den mit dem Spiegelkopf verbindbaren Träger 1 und einen am Träger 1 befestigten Motor 2 mit einer Motorwelle 3. Die Abklappvorrichtung umfasst ferner ein mit dem Spiegelfuß verbindbare Abtriebszahnrad als Abtrieb 4, wobei der Abtrieb 4 über ein Getriebe mit der Motorwelle 3 verbunden ist. Die Motorwelle 3 und die Achse des Abtriebs 4 stehen zueinander parallel. Der Motor 2, Abtrieb 4 und das Getriebe umfassend die Zwischenwelle 8 werden durch ein einziges Bauteil, nämlich den Träger 1, zueinander positioniert werden, so dass die Achsabstände von Motorwelle 3, Achse des Abtriebs 4 und der Achse der dazwischen liegenden Zwischenwelle 8 durch das einzige Bauteil, nämlich den Träger 1, festgelegt werden. Wie besonders in Fig. 2 ersichtlich sind die genannten Bauteile direkt im Träger 1 gelagert.

Fig.3 zeigt die Lagerung von Motor 2 und Abtriebsrad 4 im Träger 1 in einer Schnittdarstellung. Das Abtriebsrad 4 ist formschlüssig mit der Rastscheibe 17 verbunden. Zusammen mit der im Spiegelzusammenbau vorhandenen Spiegelkopf-Druckfeder 23 bildet die Rastkontur an der Unterseite der Rastscheibe 17 mit dem Spiegelfuß 18 eine bei Überlast überwindbare drehfeste Verbindung. Der mit einer Raststift-Druckfeder 15 belastete Raststift 14 gibt zusammen mit einer Kontur auf der Oberseite der Rastscheibe 17 die Fahrstellung vor. Die Raststift-Druckfeder 15 ist eine schwache Feder, mit einer Kraft von beispielsweise ca. 10 N.

Das Getriebe zwischen Motor 2 und Abtriebszahnrad 4 ist als zweistufiges Schneckengetriebe ausgeführt, wobei sich bei Klappbewegung die Zwischenwelle 8 um das stehende Abtriebszahnrad 4 schraubt. Die Zwischenwelle 8 weist eine Schnecke aus Stahl, nämlich die zweite Schnecke 7, auf, die in Eingriff mit dem Abtriebszahnrad 4 steht und weist ein aufgespritztes Stirnrad aus Kunststoff auf. Dieses Stirnrad wird durch die erste Schnecke 6, nämlich die Motorschnecke, angetrieben, wobei die Motorschnecke auf die Motorwelle 3 fest aufgepresst ist. Die Axialkräfte die auf die Motorschnecke 6 wirken, werden in eine Richtung im Motor 2 intern abgefangen, in die andere Richtung stützt gemäß Fig. 3 der Träger 1 das Motorwellenende.

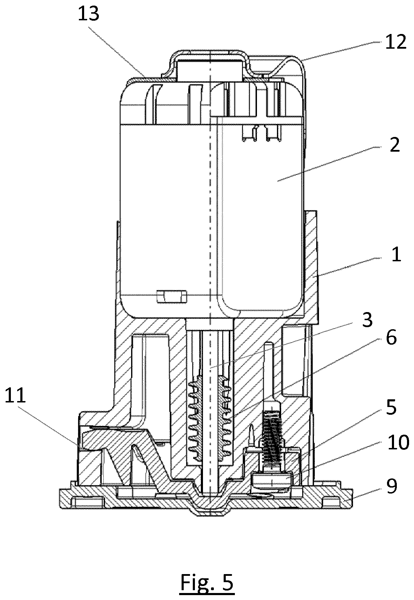

In der Ausführungsform der Fig. 5 stützt das im Träger 1 fixierte Druckstück 5 das Motorwellenende axial in Richtung zum Motor 2. Die Motorwelle 3 ist dadurch radial direkt durch den Träger 1 positioniert und axial indirekt über die im Träger 1 fixierten Elemente Druckstück 5 und Motor 2.

Das Druckstück 5 ist zwischen der Motorwelle 3 und dem Deckel 9 angeordnet. Fig. 5 zeigt einen Schnitt durch das Druckstück 5 und die Einstellschraube 10. Der Elektromotor 2 ist mit der Motorspannklammer 12 fest in den Träger 1 gespannt, wobei die Motorwelle 3 im vorderen Bereich radial im Träger 1 geführt ist, axial jedoch aus diesem herausragt und mit dem Druckstück 5 in Kontakt steht. Das Druckstück 5 ist dabei in einem Schlitz im Träger 1 eingehängt, so dass das Druckstück 5 an einem Befestigungspunkt 11 bzw. einer Befestigungsachse am Träger 1 aufliegt. Das Druckstück 5 ist mittels der Einstellschraube 10, die dem Befestigungspunkt 11 in Bezug auf die Motorwelle 3 gegenüberliegt, so dass die Motorwelle 3 zwischen Befestigungspunkt 11 und Einstellschraube 10 angeordnet ist, in Richtung zum Träger 1 verstellbar und drückt hierbei auf die Motorwelle 3.

### Bezugszeichenliste

- 1: Träger
- 2: Motor
- 3: Motorwelle
- 4: Abtrieb
- 5: Druckstück
- 6: erste Schnecke
- 7: zweite Schnecke
- 8: Zwischenwelle
- 9: Deckel
- 10: Einstellschraube
- 11: Befestigungspunkt
- 12: Motorspannklammer
- 13: Isolationskappe
- 14: Raststift
- 15: Raststift-Druckfeder
- 16: Axialkugellager
- 17: Rastscheibe
- 18: Spiegelfuß
- 19: Schrauben
- 20: Tragender Teil des Spiegelkopfes
- 21: Gleitscheibe
- 22: Rohrniet
- 23: Spiegelkopf-Druckfeder

## Patentansprüche

1. Abklappvorrichtung für einen Außenspiegel eines Kraftfahrzeuges der einen Spiegelfuß (18) und einen Spiegelkopf (20) umfasst, wobei mittels der Abklappvorrichtung der Spiegelkopf relativ zum Spiegelfuß (18) ein- und/oder ausklappbar ist, wobei die Abklappvorrichtung einen mit einem der Elemente Spiegelkopf oder Spiegelfuß (18) verbindbaren Träger (1) umfasst und einen am Träger (1) befestigten Motor (2) mit einer Motorwelle (3) umfasst, wobei die Abklappvorrichtung einen mit dem anderen der Elemente Spiegelfuß (18) oder Spiegelkopf (20) verbindbaren Abtrieb (4) umfasst, wobei der Abtrieb (4) über ein Getriebe mit der Motorwelle (3) verbunden ist, wobei die Motorwelle (3) und die Achse des Abtriebs (4) zueinander parallel stehen
**dadurch gekennzeichnet dass** Motor (2), Abtrieb (4) und Getriebe durch ein einziges Bauteil, nämlich den Träger (1), zueinander positioniert werden und direkt in oder an diesem Bauteil, nämlich dem Träger (1), gelagert werden, so dass die Achsabstände von Motorwelle (3), Achse des Abtriebs (4) und den Achsen der dazwischen liegenden Getriebeelemente (7, 8) durch das einzige Bauteil, nämlich den Träger (1), festgelegt werden.

2. Abklappvorrichtung nach Anspruch 1,
**dadurch gekennzeichnet, dass** das Getriebe zumindest eine Zwischenwelle (8) umfasst.

3. Abklappvorrichtung nach Anspruch 2,
**dadurch gekennzeichnet, dass** das Getriebe zumindest eine erste Schnecke (6) umfasst, bevorzugt zusätzlich eine zweite Schnecke (7), wobei die erste Schnecke (6) an der Motorwelle (3) angebracht ist und die bevorzugte zweite Schecke (7) an der Zwischenwelle (8) angebracht ist.

4. Abklappvorrichtung nach zumindest einem der vorhergehenden Ansprüche,
**dadurch gekennzeichnet, dass** die Motorwelle (3) axial in Richtung zum Motor (2) hin direkt am Träger (1) abgestützt ist.

5. Abklappvorrichtung nach zumindest einem der vorhergehenden Ansprüche,
**dadurch gekennzeichnet, dass** ein Druckstück (5) derart am Träger (1) fixiert ist, dass das Druckstück (5) die Motorwelle (3) gegen den Motor (2) drückt.

6. Abklappvorrichtung nach Anspruch 5,
**dadurch gekennzeichnet, dass** das Druckstück (5) zwischen der Motorwelle (3) und einem Gehäuseteil, insbesondere einem Deckel (9), angeordnet ist.

7. Abklappvorrichtung nach Anspruch 5 oder 6,
**dadurch gekennzeichnet, dass** das Druckstück (5) über eine Einstellschraube (10) im Wesentlichen axial gegen die Motorwelle (3) verstellbar ist, wobei die Einstellschraube (10) bevorzugt mit einem Gewinde im Träger (1) in Eingriff ist.

8. Abklappvorrichtung nach Anspruch 7,
**dadurch gekennzeichnet, dass** das Druckstück (5) zumindest an einem Befestigungspunkt (11), bevorzugt an einer Befestigungsachse, kippbar im Träger (1) eingehängt ist, wobei der Befestigungspunkt (11) bzw. die Befestigungsachse auf einer der Einstellschraube (10) gegenüberliegenden Seite der Motorwelle (3) liegt.

9. Abklappvorrichtung nach zumindest einem der Ansprüche 5 bis 8, **dadurch gekennzeichnet, dass** das Druckstück (5) am Träger (1) verschweißt ist.

10. Außenspiegel eines Kraftfahrzeuges, umfassend einen Spiegelfuß (18), einen Spiegelkopf (20) und eine Abklappvorrichtung nach einem der Ansprüche 1 bis 9, wobei der Träger (1) der Abklappvorrichtung mit einem der Elemente Spiegelkopf oder Spiegelfuß verbunden ist, wobei der Abtrieb (4) der Abklappvorrichtung mit dem anderen der Elemente Spiegelfuß oder Spiegelkopf verbunden ist, so dass mittels der Abklappvorrichtung der Spiegelkopf relativ zum Spiegelfuß ein- und/oder ausklappbar ist.

11. Außenspiegel nach Anspruch 10,
**dadurch gekennzeichnet, dass** der Träger (1) mittels einer Spiegelkopf-Druckfeder (23) gegen das mit dem Abtrieb (4) verbindbare Element Spiegelfuß (18) oder Spiegelkopf (20) oder eine damit drehfeste Rastscheibe (17) vorgespannt ist.

## Claims

1. Folding device for an external mirror of a motor vehicle which comprises a mirror base (18) and a mirror upper (20), wherein by means of the folding device the mirror upper can be folded in and/or folded out relative to the mirror base (18), wherein the folding device comprises a carrier (1) which can be connected to one of the elements mirror upper or mirror base (18) and comprises a motor (2) which is secured to the carrier (1) and which has a motor shaft (3), wherein the folding device comprises an output (4) which can be connected to the other of the elements mirror base (18) or mirror upper (20), wherein the output (4) is connected to the motor shaft (3) by means of a gear mechanism, wherein the motor shaft (3) and the axle of the output (4) are located parallel with each other, **characterized in that** the motor (2), output (4) and gear mechanism are positioned relative to each other by means of a single component, that is to say, the carrier (1), and are supported directly in or on this component, that is to say, the carrier (1), so that the axial spacings of the motor shaft (3), axle of the output (4) and the axles of the gear elements (7, 8) which are located therebetween are determined by means of the single component, that is to say, the carrier (1).

2. Folding device according to Claim 1,
**characterized in that** the gear mechanism comprises at least one intermediate shaft (8).

3. Folding device according to Claim 2,
**characterized in that** the gear mechanism comprises at least a first worm gear (6), preferably additionally a second worm gear (7), wherein the first worm gear (6) is fitted to the motor shaft (3) and the preferred second worm gear (7) is fitted to the intermediate shaft (8).

4. Folding device according to at least one of the preceding Claims, **characterised in that** the motor shaft (3) is axially supported directly on the carrier (1) in the direction towards the motor (2).

5. Folding device according to at least one of the preceding Claims, **characterised in that** a pressure piece (5) is fixed to the carrier (1) in such a manner that the pressure piece (5) presses the motor shaft (3) against the motor (2).

6. Folding device according to Claim 5,
**characterised in that** the pressure piece (5) is arranged between the motor shaft (3) and a housing portion, in particular a cover (9).

7. Folding device according to Claim 5 or 6,
**characterised in that** the pressure piece (5) can be adjusted by means of an adjustment screw (10) substantially axially with respect to the motor shaft (3), wherein the adjustment screw (10) is preferably in engagement with a thread in the carrier (1).

8. Folding device according to Claim 7,
**characterised in that** the pressure piece (5) is suspended so as to be able to be tilted in the carrier (1) at least at a securing location (11), preferably on a securing axle, wherein the securing location (11) or the securing axle is located at a side of the motor shaft (3) opposite the adjustment screw (10).

9. Folding device according to at least one of Claims 5 to 8,
**characterised in that** the pressure piece (5) is welded to the carrier (1).

10. External mirror of a motor vehicle, comprising a mirror base (18), a mirror upper (20) and a folding device according to any one of Claims 1 to 9, wherein the carrier (1) of the folding device is connected to one of the elements mirror upper or mirror base, wherein the output (4) of the folding device is connected to the other of the elements mirror base or mirror upper so that by means of the folding device the mirror upper can be folded in and/or folded out relative to the mirror base.

11. External mirror according to Claim 10,
**characterised in that** the carrier (1) is pretensioned by means of a mirror upper pressure spring (23) with respect to the element mirror base (18) or mirror upper (20) which can be connected to the output (4) or a locking disc (17) which is rotationally secure therewith.

## Revendications

1. Dispositif rabattable pour un rétroviseur extérieur d'un véhicule automobile qui comprend une base de rétroviseur (18) et une tête de rétroviseur (20), la tête de rétroviseur pouvant être rabattue vers l'intérieur et/ou vers l'extérieur par rapport à la base de rétroviseur (18) au moyen du dispositif rabattable, le dispositif rabattable comprenant un support (1) pouvant être raccordé à l'un des éléments constitués par la tête de rétroviseur et la base de rétroviseur (18) et comprenant un moteur (2) fixé au support (1) avec un arbre de moteur (3), le dispositif rabattable comprenant une prise de force (4) pouvant être raccordée à l'autre des éléments constitués par la base de rétroviseur (18) et la tête de rétroviseur (20), la prise de force (4) étant raccordée à l'arbre de moteur (3) par le biais d'une transmission, l'arbre de moteur (3) et l'axe de la prise de force (4) étant parallèles l'un à l'autre,
**caractérisé en ce que** le moteur (2), la prise de force (4) et la transmission sont positionnés les uns par rapport aux autres par un composant unique, à savoir le support (1), et sont supportés directement dans ou sur ce composant, à savoir le support (1), de telle sorte que les distances des axes de l'arbre de moteur (3), de l'axe de la prise de force (4) et des axes des éléments de transmission situés entre eux (7, 8) soient fixées par le composant unique, à savoir le support (1).

2. Dispositif rabattable selon la revendication 1, **caractérisé en ce que** la transmission comprend au moins un arbre intermédiaire (8).

3. Dispositif rabattable selon la revendication 2, **caractérisé en ce que** la transmission comprend au moins une première vis sans fin (6), de préférence en outre une deuxième vis sans fin (7), la première vis sans fin (6) étant montée sur l'arbre de moteur (3) et la deuxième vis sans fin préférée (7) étant montée sur l'arbre intermédiaire (8).

4. Dispositif rabattable selon au moins l'une quelconque des revendications précédentes, **caractérisé en ce que** l'arbre de moteur (3) est supporté axialement dans la direction du moteur (2) directement sur le support (1).

5. Dispositif rabattable selon au moins l'une quelconque des revendications précédentes, **caractérisé en ce qu'**une pièce de pression (5) est fixée sur le support (1) de telle sorte que la pièce de pression (5) presse l'arbre de moteur (3) contre le moteur (2).

6. Dispositif rabattable selon la revendication 5, **caractérisé en ce que** la pièce de pression (5) est disposée entre l'arbre de moteur (3) et une partie de boîtier, en particulier un couvercle (9).

7. Dispositif rabattable selon la revendication 5 ou 6,
**caractérisé en ce que** la pièce de pression (5) peut être déplacée essentiellement axialement contre l'arbre de moteur (3) par le biais d'une vis de réglage (10), la vis de réglage (10) étant préférentiellement en prise avec un filetage dans le support (1).

8. Dispositif rabattable selon la revendication 7, **caractérisé en ce que** la pièce de pression (5) est accrochée de manière à pouvoir basculer dans le support (1), au moins au niveau d'un point de fixation (11), de préférence au niveau d'un axe de fixation, le point de fixation (11) ou l'axe de fixation étant situé sur un côté de l'arbre de moteur (3) opposé à la vis de réglage (10).

9. Dispositif rabattable selon au moins l'une quelconque des revendications 5 à 8,
**caractérisé en ce que** la pièce de pression (5) est soudée au support (1).

10. Rétroviseur extérieur pour un véhicule automobile, comprenant une base de rétroviseur (18), une tête de rétroviseur (20) et un dispositif rabattable selon l'une quelconque des revendications 1 à 9, dans lequel le support (1) du dispositif rabattable est raccordé à l'un des éléments constitués par la tête de rétroviseur et la base de rétroviseur, la prise de force (4) du dispositif rabattable étant raccordée à l'autre des éléments constitués par la base de rétroviseur et la tête de rétroviseur, de telle sorte que la tête de rétroviseur puisse être rabattue vers l'intérieur et/ou vers l'extérieur par rapport à la base de rétroviseur au moyen du dispositif rabattable.

11. Rétroviseur extérieur selon la revendication 10, **caractérisé en ce que** le support (1) est précontraint au moyen d'un ressort de pression de tête de rétroviseur (23) contre l'élément constitué par la base de rétroviseur (18) ou la tête de rétroviseur (20), pouvant être connecté à la prise de force (4), ou contre un disque d'encliquetage (17) solidaire en rotation avec celui-ci.
